# EUROPÄISCHE PATENTSCHRIFT

(11) **EP 1 452 849 B1**
(45) Veröffentlichungstag und Bekanntmachung des Hinweises auf die Patenterteilung: **24.02.2016**
(21) Anmeldenummer: 03100489.8
(22) Anmeldetag: 27.02.2003
(51) Int. Cl.: G01N 1/38, G01G 17/04, G01G 23/37, G01N 35/00

(54) **Vorrichtung und Verfahren zur Herstellung von Lösungen und/oder Verdünnungen im Labor**
Apparatus and method for the preparation and/or dilution of solutions in the lab
Appareil et méthode pour la préparation et/ou la dilution de solutions au laboratoire

(43) Veröffentlichungstag der Anmeldung: 01.09.2004
(73) Patentinhaber: Mettler-Toledo GmbH, 8606 Greifensee (CH)
(72) Erfinder: Appoldt, Yvonne, 8051 Zürich (CH); Burmester, Jörg, 8053 Zürich (CH); Kläy, Matthias, 8640 Rapperswil (CH)
(74) Vertreter: Mettler-Toledo

(56) Entgegenhaltungen:
- EP-A- 0 651 306
- EP-A- 0 999 432
- WO-A-83/02761
- WO-A-02/073142
- US-A1- 2002 020 569
- US-B1- 6 194 670

## Beschreibung

Die Erfindung betrifft eine Vorrichtung zur Herstellung einer Lösung aus einem Feststoff mit einer Flüssigkeit und/oder einer Verdünnung einer Flüssigkeit mit einer weiteren Flüssigkeit mit einer Waage und mit mindestens einer elektronischen Flüssigkeitsdosiervorrichtung, insbesondere einer elektronischen Pipette, wobei eine Kommunikation zwischen der Waage und der mindestens einen elektronischen Flüssigkeitsdosiervorrichtung herstellbar ist. Ferner betrifft die Erfindung ein Verfahren zur Herstellung von Lösungen und/oder Verdünnungen im Labor unter Verwendung einer solchen Vorrichtung sowie ein Programm in einer genannten Vorrichtung zur Durchführung des genannten Verfahrens.

Der Einsatz von Dosiervorrichtungen, insbesondere von elektronischen Handdosiervorrichtungen, beispielsweise von elektronischen Pipetten, ist in Labors weit verbreitet. Diese finden ihre Anwendung bei all jenen Vorgängen, die eine definierte Flüssigkeitszugabe erfordern, beispielsweise die Herstellung von Lösungen oder Verdünnungen. Meist handelt es sich dabei um Routine-Laborarbeiten, wobei unter Verwendung unterschiedlicher Chemikalien verschiedene und vielfältige Endprodukte erzeugt werden sollen, wobei diese Arbeiten in der Regel als Einzelaufgaben nicht so häufig durchgeführt werden, dass sich beispielsweise ein Einsatz eines Laborroboters ökonomisch rechtfertigen würde. Es ist jedoch wünschenswert, elektronische Dosiersysteme dahingehend zu vereinfachen und zu automatisieren, dass Betriebsabläufe, Betriebsparameter, Programme bzw. Programmteile besser beeinflusst und kontrolliert werden können und die produzierten Daten besser gesichert werden können.

Die EP 0 999 432 A2 beschreibt ein Verfahren zum Betreiben eines elektronischen Dosiersystems sowie ein solches Dosiersystem mit einer elektronischen Handdosiervorrichtung, bei welcher es sich beispielsweise um eine elektronische Pipette handeln kann, die eine Datenschnittstelle aufweist, mittels derer über eine Datentransfereinrichtung mit der Datenschnittstelle einer Datenverarbeitungsanlage eine Verbindung geschaffen werden kann. Dabei sind von der Datenverarbeitungsanlage gerätetypenspezifische und/oder gerätespezifische Parameter und/oder Anwenderparameter und/oder Routinen für die Durchführung von Betriebsabläufen und/oder das Programm der Steuer- und Regeleinrichtung der elektronischen Handdosiervorrichtung und/oder mindestens ein Programmteil in einen Schreib-/Lesespeicher der Handdosiervorrichtung einschreibbar und/oder aus diesem auslesbar und/oder die Hariddosiervorrichtung ist fernsteuerbar, was eine Automatisierung von Dosiervorgängen begünstigt, beispielsweise beim Einsatz der Handdosiervorrichtung in einem übergeordneten Automatisierungsprozess oder bei deren gefahrlosem Einsatz in kontaminierter Umgebung. Mittels einer Routine für die Durchführung von Betriebsabläufen kann beispielsweise das Aufnehmen, Mischen und Abgeben bestimmter Flüssigkeitsmengen gesteuert werden, oder eine Verdünnungsreihe, bei der das abgegebene Dosiervolumen von Verdünnungsschritt zu Verdünnungsschritt halbiert wird. Weiterhin kann eine solche Routine auch in die Handdosiervorrichtung überspielt werden.

Für die routinemässige Herstellung von Lösungen und/oder Verdünnungen im Labor werden neben elektronischen Flüssigkeitsdosiervorrichtungen, insbesondere elektronischen Pipetten, auch elektronische Waagen eingesetzt. Dabei wird, beispielsweise im Falle der Erzeugung einer Lösung, zunächst ein Feststoff in ein Gefäss auf der Waage eingewogen. Ist die gewünschte Konzentration der Lösung festgelegt, so ist anhand der eingewogenen Menge die Menge des Lösungsmittels zu bestimmen, die für die angestrebte Lösungskonzentration, beispielsweise mittels einer Pipette oder eines Messzylinders oder sonstigen Gefässes hinzugefügt werden muss. Es ist allerdings zu beachten, dass dabei Parameter des Lösungsmittels, wie sie bei einer solchen Bestimmung Eingang in die Berechnung finden, als da sind, die Temperatur, die Dichte, der Volumenausdehnungskoeffizient und/oder die Reinheit des Lösungsmittels, genügend genau berücksichtigt werden, um zum erwünschten Endergebnis zu gelangen. In der Regel werden solche Berechnungen mittels eines einfachen Laborcomputers oder eines Taschenrechners von der mit der Herstellung der Lösung und/oder der Verdünnung beauftragten Person ausgeführt. In den meisten Fällen ist eine solche Berechnung zeitaufwändig und birgt die Gefahr von Rechenfehlern in sich. Überdies fehlt ein Kontrollmechanismus, ob die hergestellte Lösung und/oder die Verdünnung in Bezug auf die in die Berechnungen eingehenden Daten plausibel ist, und inwieweit das erzeugte Produkt innerhalb des Zielbereichs der erwünschten Konzentration liegt.

Es ist auch gängige Praxis, die Menge der hergestellten Lösung an das zur Verfügung stehende Gefäss anzupassen. Dies bedeutet, dass, wenn die Lösung beispielsweise in einem Messkolben mit vorgegebenem Volumen hergestellt wird, die verwendeten Substanzen daraufhin berechnet und eingewogen werden müssen, dass das Volumen des Messkolbens dem Volumen der herzustellenden Lösung oder Verdünnung entspricht. Dies hat zur Folge, dass häufig zu viel Lösung erzeugt wird, die, falls sie nicht anderweitig benötigt wird, entsorgt werden muss.

In der WO 02/073142 A1 ist eine Vorrichtung zum Mischen von Substanzen, insbesondere von Farbstoffen, beschrieben, die gegebenenfalls in einer Messvorrichtung, insbesondere einer Waage, integrierte Einheiten, wie eine Prozessoreinheit, eine zur Speicherung von Mischformeln dienende lokale Speichereinheit, eine Anzeigeeinheit und eine Eingabeeinheit aufweist. Die Waage erfasst die Menge der jeweils in einen auf der Waagschale befindlichen Behälter zugegebenen Komponenten. Im Falle eines automatisierten Betriebs steuert die Waage mit Zufuhrleitungen versehene Ventile dem Anteil der zu mischenden Substanzen entsprechend. Dabei wird ein in einer Mischformel enthaltener Sollwert mit dem von der Waage gemessenen Istwert verglichen und in Anhängigkeit davon die Zufuhr,der in den Behälter einzufüllenden Substanz gesteuert.

Die EP 0 651 306 A1 offenbart eine Apparatur und ein Verfahren zur Herstellung von Lösungen, bei welchen sich ein die Lösungskomponenten aufnehmendes Gefäss auf der Waagschale einer Waage befindet. Die Zugabe des Lösungsmittels erfolgt über ein an eine Zuleitung von einem Lösungsmittelbehälter angeschlossenes Ventil, dem das Lösungsmittel mittels einer Pumpe zugeführt wird. Das Ventil und die Pumpe sowie die Waage werden von einer Kontrolleinheit überwacht. Dem Bediener werden Grenzwerte in Form von Gewichtswerten für die Zugabe des Lösungsmittels gemäss einem in der Kontrolleinheit gespeicherten Verfahrensablauf angezeigt. Anhand der von der Waage gelieferten Wägedaten, die in Form eines Laufbalkens an einer Ausgabeeinheit ausgegeben werden, wird der Bediener geführt, die Zugabe des Lösungsmittels zu stoppen, wenn der Wägewert innerhalb der angegebenen Grenzen liegt.

In der WO 83/02761 A1 ist ebenfalls eine Apparatur sowie ein Verfahren zur Herstellung von Lösungen gezeigt, welche über eine Kontrolleinheit und eine Waage verfügt, wobei einem auf der Waagschale befindlichen Gefäss über an eine Zuleitung von einem Lösungsmittelbehälter angeschlossene Ventile das Lösungsmittel mittels einer Pumpe zugeführt wird. Die Abgabe der Lösungsmittelmenge erfolgt manuell oder automatisch anhand eines Kontrollprogramms, indem laufend die ermittelten Wägeergebnisse an die Kontrolleinheit übertragen und an einer Ausgabeeinheit angezeigt werden. Die Ventile weisen unterschiedliche Durchflussraten auf, so dass zu Beginn der Lösungsmittelzugabe das Ventil mit der höheren Durchflussrate geöffnet wird, und wenn sich der Wägewert für das Gesamtgewicht der Lösung seinem Sollwert nähert, das Ventil mit der niedrigeren Durchflussrate in Aktion tritt.

Die genannten Schriften offenbaren Herstellungsmethoden für eine Mischung oder eine Lösung, bei welchen das Zudosieren des Lösungsmittels oder einer weiteren Komponente über einen Vergleich von Sollwert und Istwert gesteuert werden, wobei die Mittel zum Zudosieren im wesentlichen fest installiert sind.

Aufgabe der Erfindung ist es daher, eine Vorrichtung zur Herstellung einer Lösung aus einem Feststoff mit einer Flüssigkeit und/oder zur Herstellung einer Verdünnung einer Flüssigkeit mit einer weiteren Flüssigkeit vorzuschlagen, welche eine Vereinfachung der Tätigkeiten bewirkt und einer Erhöhung der Sicherheit dient. Es ist eine weitere Aufgabe ein einfaches und sicheres Verfahren sowie ein Programm für die Herstellung einer Lösung aus einem Feststoff mit einer Flüssigkeit und/oder für die Herstellung einer Verdünnung einer Flüssigkeit mit einer weiteren Flüssigkeit vorzuschlagen.

Im Rahmen der Erfindung ist in den Begriff einer Vorrichtung oder eines Verfahrens zur Herstellung einer Lösung aus einem Feststoff mit einer Flüssigkeit und/oder einer Verdünnung einer Flüssigkeit mit einer weiteren Flüssigkeit auch die Möglichkeit der Verwendung von mehr als einem Feststoff oder mehr als einer Flüssigkeit als Lösungsmittel beziehungsweise als Verdünnungsmittel eingeschlossen.

Die Aufgabe wird erfindungsgemäss mit den Merkmalen der Vorrichtung nach Anspruch 1, sowie einem Verfahren nach Anspruch 8 und einem Programm nach Anspruch 17 gelöst.

In einer Vorrichtung zur Herstellung einer Lösung aus einem Feststoff mit einer Flüssigkeit und/oder einer Verdünnung einer Flüssigkeit mit einer weiteren Flüssigkeit mit einer Waage, die eine Waagschale, eine Anzeige- und Bedieneinheit, einen Prozessor, einen Speicher und eine Datenschnittstelle aufweist und mit mindestens einer elektronischen Pipette, die einen Mikroprozessor, eine Speichereinheit, ein ihre Auswahl signalisierendes Kennzeichnungselement und eine Datenschnittstelle aufweist, ist eine Kommunikation zwischen der Datenschnittstelle der Waage und der Datenschnittstelle der mindestens einen elektronischen Pipette herstellbar. In der Waage ist ein Programm zur Herstellung einer Lösung aus einem Feststoff mit einer Flüssigkeit und/oder einer Verdünnung einer Flüssigkeit mit einer weiteren Flüssigkeit ausführbar, welches dazu geeignet ist, im Prozessor der Waage unter Verwendung von von der Bedienperson getätigten Anweisungen und im Speicher der Waage vorhandenen Substanzdaten und gegebenenfalls aus ermittelten Wägeergebnissen Berechnungen auszuführen, eine zu verwendende elektronische Pipette aus einer vorhandenen Auswahl zu selektieren und an dieser die Einstellung des aufzunehmenden und/oder abzugebenden Flüssigkeitsvolumens vorzunehmen.

In einem erfindungsgemässen Verfahren zur Herstellung von Lösungen und/oder Verdünnungen im Labor wird mit einer oben genannten Vorrichtung im Prozessor der Waage ein Programm ausgeführt, welches unter Verwendung von von der Bedienperson getätigten Anweisungen und im Speicher der Waage vorhandenen Substanzdaten und gegebenenfalls aus ermittelten Wägeergebnissen Berechnungen durchführt, eine zu verwendende elektronische Pipette aus einer vorhandenen Auswahl selektiert, das Kennzeichnungselement der selektierten elektronischen Pipette aktiviert und an der elektronischen Pipette die Einstellung des aufzunehmenden und/oder abzugebenden Flüssigkeitsvolumens vornimmt.

Die Vorrichtung sowie das Verfahren zur Herstellung von Lösungen und/oder Verdünnungen dienen dazu, die Bedienperson bei ihrer täglichen Arbeit im Labor zu unterstützen. Dabei wird neben der Vereinfachung des Verfahrens und einer daraus resultierenden Zeitersparnis in beachtlicher Weise die Sicherheit bei der Herstellung von Lösungen und/oder Verdünnungen im Labor erhöht. Die Bedienperson muss beispielsweise eine elektronische Pipette nicht mehr von Hand einstellen, sondern das Programm nimmt automatisch die Einstellung derselben auf das erforderliche Volumen vor.

Dadurch, dass die verfahrensrelevanten Berechnungen in der Waage ausgeführt werden, wird ausserdem die Gefahr von Rechenfehlern massiv reduziert und die Sicherheit erhöht.

Im Falle der Erzeugung von Lösungen und/oder Verdünnungen unter Verwendung sehr teurer Materialien, erlaubt das Verfahren ein sehr präzises Einwägen und Zudosieren von weiteren Substanzen, wodurch weder zu viel noch zu wenig der gewünschten Lösung und/oder Verdünnung erzeugt wird, und daher weder Abfall entsteht, noch ein zweiter Arbeitsgang zur Korrektur notwendig ist. Dies dient letztendlich der Kosteneinsparung.

In der erfindungsgemässen Vorrichtung beziehungsweise beim erfindungsgemässen Verfahren fungiert eine elektronische Pipette, als eine Art Flüssigkeitsspatel. Aufgrund ihres doch relativ kleinen Prozessor- und Speicherpotenzials hat es sich als sinnvoll erwiesen, die Steuerung der Vorrichtung von einem übergeordneten System, hier der Waage, durchzuführen, insbesondere deshalb, weil jene die relevanten Messwerte, nämlich das Gewicht der jeweils in Frage kommenden Substanzen mit hoher Genauigkeit zu bestimmen in der Lage ist. Ausserdem verfügt eine elektronische Waage über eine Anzeige- und Bedieneinheit, über welche Eingaben erheblich leichter zu tätigen sind, als beispielweise vermittels der Bedienknöpfe einer Pipette. Ebenso ist der Bildschirm einer Waage geeignet, ein Auswahlmenü für ein Programm oder eine Vorschrift für einen Arbeitsablauf oder ein Ergebnis besser darzustellen, als der räumlich begrenzte Anzeigebereich einer Pipette.

Die Erfindung nutzt ausserdem das Potenzial einer elektronischen Waage, vermittels Datenschnittstellen mit anderen elektronischen Laborgeräten kommunizieren und interagieren zu können. Diese Eigenschaft wird kombiniert mit dem Erfordernis, eine elektronische Pipette auf die Kommunikation mit einer Waage zu optimieren, um deren Vorgaben bei der Herstellung von Lösungen und/oder Verdünnungen im Labor erfüllen zu können. Ungeachtet dessen ist es wünschenswert, sowohl die Waage als auch die elektronische Pipette in unabhängiger Weise, d.h. wenn diese nicht Teil einer oben genannten Vorrichtung sind, betreiben zu können.

In einer bevorzugten Ausführungsform der Erfindung steht ein Code-Lesegerät mit der Waage in einer Kommunikationsverbindung. Es dient, zumindest teilweise der Dateneingabe und insbesondere der Identifikation der zu verwendenden Chemikalien.

Bevorzugt wird die Eingabe von Anweisungen und Bestätigungen durch die Bedienperson mittels der Anzeige- und Bedieneinheit der Waage ausgeführt.

Die erfindungsgernässe Vorrichtung verfügt in einer besonderen Ausführungsform über eine Dokumentationsvorrichtung, insbesondere einen Protokolldrucker, einen Etikettendrucker und/oder einen Code-Drucker, welche mit der Waage in Verbindung steht. Hierdurch erhält die Bedienperson standardisierte Protokolle, die der Rückführbarkeit der Arbeitsabläufe dienen. Auch kann das die fertige Lösung oder Verdünnung enthaltende Gefäss mit einem ausgedruckten Etikett oder Code eindeutig und fehlerfrei gekennzeichnet werden.

Eine besondere Ausgestaltung der Erfindung sieht vor, dass eine Datenbank im Speicher der Waage vorhanden ist, in welcher abrufbar Substanzdaten und/oder Substanzparameter und/oder Arbeitsabläufe abgelegt sind.

In einer Weiterentwicklung des Erfindungsgedankens kann die Waage in eine Kommunikationsverbindung mit einem Labor-Informations-Management-System gebracht werden, wobei aus diesem sowohl Information über die Parameter der zu verwendenden Substanzen abgerufen werden können, als auch ein Protokoll über eine erfolgte Herstellung einer Lösung oder einer Verdünnung abgelegt werden und von dort gegebenenfalls für eine weitere Verwendung zur Verfügung gestellt werden kann.

In einer Variante der Erfindung ist die Waage mit einer Datenverarbeitungsanlage, insbesondere einem Personalcomputer oder einem Palmtop verbindbar und/oder an einen Rechner eines Computer-Netzwerks anschliessbar. Dort kann jeweils eine Datenbank vorhanden sein, in welcher Substanzdaten und/oder Substanzparameter und/oder Arbeitsabläufe abgelegt sind und von der Waage abrufbar sind. Auch ist es denkbar, dass die Waage Daten in das angeschlossene System auslagert, oder dass die Eingabe von Daten von einer Eingabeeinheit einer angeschlossenen Datenverarbeitungsanlage erfolgt.

In der erfindungsgemässen Vorrichtung zur Herstellung von Lösungen und/oder Verdünnungen weist eine elektronische Pipette ein Kennzeichnungselement auf, wobei während des Verfahrens zur Herstellung von Lösungen und/oder Verdünnungen das Programm aus einer vorhandenen Auswahl elektronischer Pipetten eine geeignete selektiert, deren Kennzeichnungselement aktiviert, und an der elektronischen Pipette die Einstellung des aufzunehmenden und/oder abzugebenden Flüssigkeitsvolumens vornimmt.

In einer Weiterbildung des erfindungsgemässen Verfahrens erfasst die Waage das Gewicht einer hergestellten Lösung und/oder Verdünnung und unterzieht die erfolgte Herstellung einer Lösung und/oder einer Verdünnung einer Plausibilitätskontrolle. Die Waage stellt in der Vorrichtung zur Herstellung einer Lösung und/oder einer Verdünnung ein zweites unabhängiges Messinstrument dar, wobei diese Tatsache einerseits für eine hochgenaue Mengenbestimmung, beispielsweise bei der Verarbeitung sehr teurer Substanzen oder kleiner Volumina, und andererseits als Bestätigungs- und Kontrollwerkzeug genutzt werden kann. Somit wird die Sicherheit für den Herstellungsprozess selbst und für das Ergebnis dieses Prozesses erhöht.

Mittels einer Dokumentationsvorrichtung, die mit der Waage in Verbindung steht wird ein Protokoll über eine durchgeführte und/oder gegebenenfalls abgebrochene Herstellung einer Lösung aus einem Feststoff mit einer Flüssigkeit und/oder einer Verdünnung einer Flüssigkeit mit einer weiteren Flüssigkeit ausgegeben. Dadurch ist eine Rückverfolgbarkeit durch die Protokollierung aller ausgeführten Handlungen seitens der Bedienperson, sowie der Dokumentation über die verwendeten Substanzen gewährleistet. Auch die automatisierte Generierung eines eindeutigen Identifikationshinweises, beispielsweise eines Klebeetiketts, das auf dem Gefäss, welches zur Herstellung von Lösungen und/oder Verdünnungen verwendet wurde, angebracht werden kann, erhöht die Sicherheit im Labor und beugt einer Verwechslungsgefahr vor.

Die im erfindungsgemässen Verfahren auszuführenden Arbeitsabläufe sind frei konfigurierbar.

In der Vorrichtung zur Herstellung einer Lösung aus einem Feststoff mit einer Flüssigkeit und/oder einer Verdünnung einer Flüssigkeit mit einer weiteren Flüssigkeit ist ein Programm ausführbar, das einen von einer Bedienperson bestimmten Arbeitsablauf zur Herstellung einer Lösung aus einem Feststoff mit einer Flüssigkeit und/oder einer Verdünnung einer Flüssigkeit mit einer weiteren Flüssigkeit abarbeitet. Dabei werden von der Bedienperson getätigte Anweisungen und im Speicher der Waage vorhandene Substanzdaten und gegebenenfalls ermittelte Wägeergebnisse verwendet. Im Programm werden Berechnungen ausgeführt, eine zu verwendende elektronische Pipette aus einer vorhandenen Auswahl selektiert, wobei das Programm das Kennzeichnungselement der selektierten elektronischen Pipette aktiviert und an der elektronischen Pipette die Einstellung des aufzunehmenden und/oder abzugebenden Flüssigkeitsvolumens vornimmt.

Weitere Einzelheiten der Erfindung ergeben sich an Hand der nachfolgenden Beschreibung von in den Zeichnungen schematisch dargestellten Abläufen und Ausführungsbeispielen sowie einer dargestellten Vorrichtung zur Herstellung einer Lösung aus einem Feststoff mit einer Flüssigkeit und/oder einer Verdünnung einer Flüssigkeit mit einer weiteren Flüssigkeit. Es zeigen:
- Figur 1: eine Vorrichtung zur Herstellung einer Lösung aus einem Feststoff mit einer Flüssigkeit und/oder einer Verdünnung einer Flüssigkeit mit einer weiteren Flüssigkeit,
- Figur 2: die von einer Bedienperson auszuführenden Tätigkeiten a) bei der Herstellung einer chemischen Lösung nach dem Stand der Technik im Vergleich zu b) bei der Herstellung einer chemischen Lösung mittels eines erfindungsgemässen Verfahrens,
- Figur 3: den detaillierten Ablauf der Herstellung einer chemischen Lösung mittels eines erfindungsgemässen Verfahrens,
- Figur 4: den detaillierten Ablauf der Herstellung einer Verdünnung mittels eines erfindungsgemässen Verfahrens.

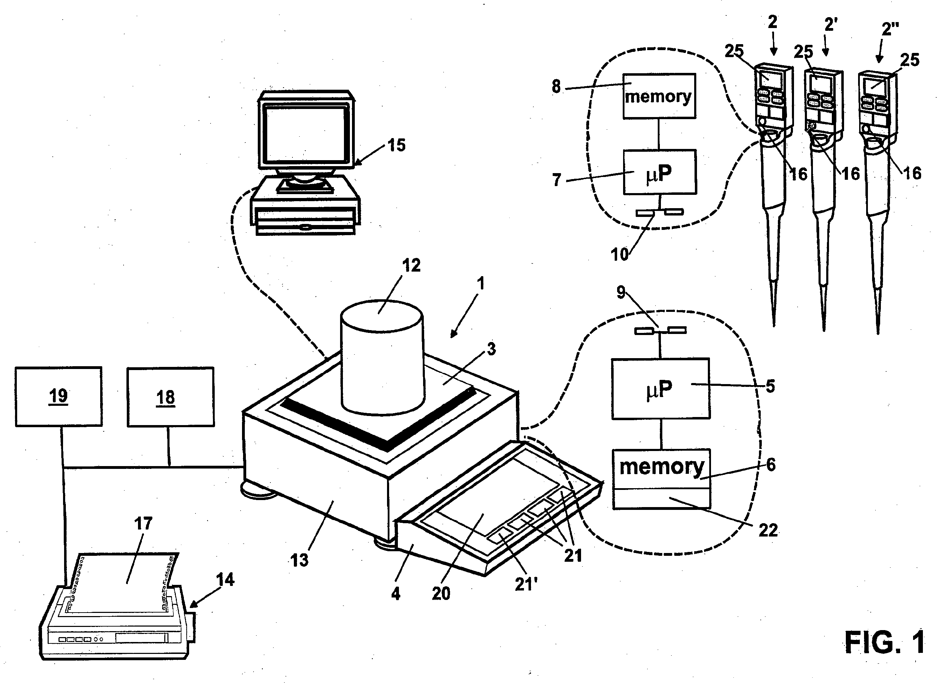

Die Figur 1 zeigt beispielhaft die Ausgestaltung eines Arbeitsplatzes mit einer Vorrichtung zur Herstellung einer Lösung aus einem Feststoff mit einer Flüssigkeit und/oder einer Verdünnung einer Flüssigkeit mit einer weiteren Flüssigkeit. Ein grundlegender Bestandteil dieser Vorrichtung ist eine Waage 1 mit einer Waagschale 3 und mit einer Anzeige- und Bedieneinheit 4. Die Waage 1 ist mit einem Prozessor 5, einer Speichereinheit 6 und einer Datenschnittstelle 9 ausgestattet, wobei die physischen Teile der Datenschnittstelle 9 am Gehäuse 13 der Waage 1, nach aussen weisend angeordnet sein können. Weiterhin steht eine Auswahl von elektronischen Pipetten 2, 2', 2" zur Verfügung, von denen jede für ein anderes Maximalvolumen ausgelegt ist. Jede dieser Pipetten 2, 2', 2" ist mit einem Mikroprozessor 7 und einer Speichereinheit 8 ausgerüstet, wobei der Mikroprozessor 7 mit einer Datenschnittstelle 10 verbunden ist, die in Kommunikationsverbindung mit der Datenschnittstelle 9 der Waage 1 stehen kann. Ein solches Datenschnittstellenpaar 9, 10 kann für eine leitungsgebundene oder für eine drahtlose Kommunikationsverbindung ausgelegt sein. Als Beispiele für letztere seien eine Funkverbindung oder eine Infrarot-Verbindung genannt. Dabei verfügt jede der Datenschnittstellen 9, 10 über eine Sende- und eine Empfangseinheit. Jede der vorhandenen Pipetten 2, 2', 2" weist ein Kennzeichnungselement, beispielsweise eine Leuchtdiode 16 auf, die ein optisches Signal ausgibt, wenn die Waage 1 in Kommunikationsverbindung mit der Pipette 2, 2', 2" steht und/oder wenn der momentan im Prozessor 5 der Waage 1 aktive Arbeitsablauf eine entsprechende Pipette 2, 2', 2" als geeignet für ein zuzugebendes Lösungs- oder Verdünnungsmittel ausgewählt hat und gegebenenfalls eine Einstellung der ausgewählten elektronischen Pipette 2' vorgenommen hat.

Eine apparativ einfache Lösung besteht beispielsweise auch darin, den Anzeigebereich 25 einer elektronischen Pipette als Kennzeichnungselement zu verwenden und damit auf die Leuchtdiode 16 zu verzichten. Im Falle der Auswahl einer geeigneten Pipette 2' für das zuzugebende Lösungs- oder Verdünnungsmittel, blinkt der Anzeigebereich 25 der betreffenden Pipette 2' für die Bedienperson erkennbar. Alternativ kann die selektierte Pipette 2' auch ein akustisches Signal erzeugen.

Das Programm, welches in herkömmlicher Weise im Mikroprozessor 7 einer Pipette 2, 2', 2" die Betätigung derselben ermöglicht, ist derart angepasst, dass die elektronische Pipette 2, 2', 2" in der Lage ist, mit einer Waage 1 zu kommunizieren, um von dieser gesteuert zu werden. Ein solches Programm enthält beispielsweise ein sogenanntes Protokoll für die Kommunikationsverbindung zwischen Waage 1 und Pipette 2, 2', 2", wobei ein entsprechendes Protokoll waagenseitig im Programm zur Herstellung einer Lösung aus einem Feststoff mit einer Flüssigkeit und/oder einer Verdünnung einer Flüssigkeit mit einer weiteren Flüssigkeit, welches vorwiegend im Prozessor der Waage 1 abgearbeitet wird, als Programmteil implementiert ist.

Die Vorrichtung ist so ausgelegt, dass die Anforderungen an die Speicherkapazität der Speichereinheit 8 der elektronischen Pipette 2, 2', 2" und auch an deren Mikroprozessor 7 nicht besonders hoch sind, sondern die Pipette 2, 2', 2", als sogenanntes "Slave"-Instrument vollständig vom sogenannten "Master"-Instrument Waage 1 gesteuert wird.

Auf der Waagschale 3 ist ein Gefäss 12 platziert, in welches zu lösende und/oder zu verdünnende Substanzen eingebracht werden, um mittels der Waage 1 abgewogen zu werden. Auf diese Weise kann die Menge einer ersten Substanz für die Lösung und/oder die Verdünnung sehr genau bestimmt werden.

Die Waage 1 ist mit einem Drucker 14 verbunden, auf welchem ein Protokoll 17 ausgegeben wird. Es ist möglich, weitere Peripheriegeräte mit der Waage 1 zu verbinden, beispielsweise einen Etikettendrucker 18 oder ein Code-Lesegerät 19.

Die Anzeige- und Bedieneinheit 4 der Waage 1 verfügt über Eingabetasten 21 und einen Bildschirm 20, welcher vorzugsweise als so genanntes Pixel-Display ausgestaltet ist. Er dient unter anderem der Anzeige von Wägeergebnissen, Waageneinstellungen und Zusatzinformationen, unter anderem auch des Datums und der Uhrzeit. Ausserdem sind auf dem Bildschirm 20 Anweisungen für die Durchführung eines Arbeitsablaufs darstellbar, sogenannte SOPs. Insbesondere ist der Bildschirm 20 als sogenannter Touchscreen ausgebildet, so dass im Rahmen von ausgewählten und angezeigten Arbeitsabläufen Eingaben, beispielsweise ein Zielvolumen oder eine Zielkonzentration oder eine Bestätigung direkt am Bildschirm 20 getätigt werden können und gegebenenfalls eine Auswahl aus einem Programm-Menü getroffen werden kann. Auch können über die Anzeige- und Bedieneinheit 4 neue Arbeitsabläufe und/oder ein Protokoll 17, welches den Lösungs- und/oder Verdünnungsvorgang dokumentiert, konfiguriert werden.

Die Daten der verwendeten Chemikalien (Feststoffe, Lösungsmittel und gegebenenfalls andere Flüssigkeiten) sind in einer Datenbank 22 gespeichert, insbesondere sind deren Eigenschaften und Stoffparameter Bestandteil der Datenbank-Information. Ebenso sind auch die Arbeitsabläufe zur Herstellung einer Lösung oder einer Verdünnung in der Datenbank 22 gespeichert, wobei diese Arbeitsabläufe von der Bedienperson selbst oder von einer für das Labor verantwortlichen Person geändert oder neu erstellt werden können, also frei konfigurierbar sind. Diese Datenbank 22 kann im Speicher 6 in der Waage 1 vorhanden sein.

In gewissen Fällen, insbesondere dort, wo eine erhöhte Speicherkapazität vonnöten ist, kann es sich als sinnvoll erweisen, die Waage 1 mit einem Computer 15, sei dies ein Personalcomputer 15 oder ein Palmtop, oder ein Rechner in einem Computer-Netzwerk zu verbinden, wobei diese die Vorrichtung zur Herstellung einer Lösung und/oder einer Verdünnung unterstützen. In der Figur 1 ist diese optionale Verbindung gestrichelt gezeichnet. Insbesondere kann auf diese Weise auf eine externe Datenbank, aus der Arbeitsabläufe oder Stoffparameter von der Waage 1 abgerufen und in ihren Speicher 6 geladen werden können, oder ein Labor-Informations-Management-System (LIMS), in welchem die Daten der hergestellten Lösung und/oder Verdünnung abgelegt werden können, zurückgegriffen werden.

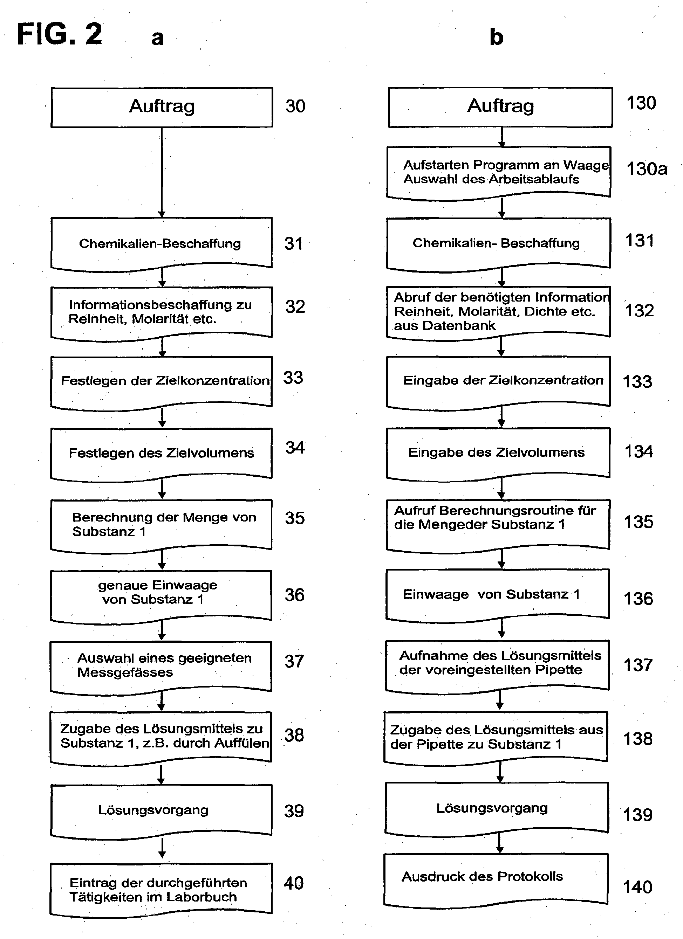

Die Herstellung einer Lösung aus einem Feststoff, beispielsweise einem Pulver, und einer oder mehrerer Flüssigkeiten nach den gängigen Verfahren gemäss dem Stand der Technik erfordert von der betreffenden Bedienperson vielfältige Kenntnisse über die Stoffeigenschaften der zur Verfügung stehenden Materialien sowie das Ausführen von Umrechnungen, um je nach Anforderung zu der Molarität oder der Gewichts- oder Volumenkonzentration der herzustellenden Lösung zu gelangen. So erfolgt eine solche konventionelle Herstellung einer Lösung im Labor nach folgenden, überwiegend von der mit der Herstellung der Lösung beauftragte Person auszuführenden Arbeitsschritten 30 bis 40, wie unter a) auf der linken Seite der Figur 2 zu sehen ist.
30 Entgegennahme des Auftrags zur Herstellung einer Lösung aus einem Feststoff mit einer oder mehreren Flüssigkeiten.
31 Auswahl und Bereitstellung der entsprechenden Chemikalien, das heisst der zu lösenden Substanz und des Lösungsmittels oder der Lösungsmittel.
32 Beschaffung der Information über die betreffenden Chemikalien (Reinheit, Dichte, Molargewicht, etc.) entweder aus Tabellen, oder einer Datenbank, oder vom Aufdruck auf dem entsprechenden Behälter.
33 Festlegen der Zielkonzentration der Lösung in der gewünschten Masseinheit (beispielsweise Gewichtsprozent, Volumenprozent, Mol pro Liter). Dieses Festlegen bedarf gegebenenfalls gewisser Umrechnungen unter Berücksichtigung der im vorigen Schritt beschafften Informationen und Stoffparameter.
34 Festlegen des Zielvolumens für die herzustellende Lösung, welches sich hauptsächlich am Bedarf der Lösung für weitere Prozesse orientieren wird.
35 Berechnung der einzuwiegenden Menge der ersten Substanz, welche meist als Feststoff, beispielsweise als Pulver vorliegt, und Berechnung des Volumens eines oder mehrerer zuzugebender Lösungsmittel.
36 Genaues Einwiegen der entsprechenden Menge in ein geeignetes Gefäss, welches auf der Waagschale, beispielsweise einer Laborwaage platziert wurde und nachdem die Waage auf das Gefäss tariert wurde. Die Einwaage muss entsprechend der gewünschten Genauigkeit für die Konzentration der Lösung genau sein, da häufig die zuzugebende Menge an Lösungsmittel bereits vorab berechnet worden ist, beziehungsweise die Gesamtmenge durch das Volumen des vorhandenen Messgefässes vorgegeben ist.
37 Auswahl eines geeigneten Messgefässes, beispielsweise eines geeichten Messkolbens, und Transfer der ersten Substanz in den Messkolben.
38 Zugabe des Lösungsmittels in das Gefäss, beziehungsweise in den Messkolben, mit der ersten Substanz, wobei sich dieses nicht mehr auf der Waagschale zu befinden braucht. Diese Zugabe erfolgt entweder durch Auffüllen des Messkolbens bis zu dessen spezifiziertem Volumen oder gezielt mit einer geeigneten Pipette, wobei diese gegebenenfalls zuvor auf das erforderliche Volumen eingestellt wurde.
39 Unterstützen des Lösungsvorgangs, z.B. durch Schütteln des Gefässes oder Umrühren im Gefäss.
40 Eintrag der durchgeführten Arbeiten sowie der verwendeten Chemikalien samt deren spezifischer Parameter ins Laborbuch und Kennzeichnung des die Lösung enthaltenden Gefässes.

Im Vergleich zum in Figur 2a dargestellten und oben beschriebenen Stand der Technik zeigt die Figur 2b beispielhaft ein Ablaufschema für ein erfindungsgemässes Verfahren zur Herstellung einer Lösung, wobei die im Zusammenhang mit Figur 2a gezeigten und beschriebenen Schritte 30 bis 40 durch die Schritte 130 bis 140 ersetzt werden.

Dabei werden die zu erfolgenden Eingaben an der Anzeige- und Bedieneinheit 4 der Waage 1 getätigt.
130 Entgegennahme des Auftrags zur Herstellung einer Lösung aus einem Feststoff mit einer Flüssigkeit.
130a Aufstarten des Programms zur Herstellung einer Lösung aus einem Feststoff mit einer Flüssigkeit und/oder einer Verdünnung einer Flüssigkeit mit einer weiteren Flüssigkeit an der Anzeige- und Bedieneinheit 4 der Waage 1 und Selektion des Arbeitsablaufs zur Herstellung einer bestimmten Lösung aus einer Auswahl von bereits im Programm vordefinierten Arbeitsabläufen im Programm-Menu, welches auf dem Bildschirm 20 dargestellt wird.
131 Auswahl und Bereitstellung der entsprechenden Chemikalien, das heisst der zu lösenden Substanz und des Lösungsmittels oder der Lösungsmittel.
132 Abruf der benötigten Information, wobei das Programm auf eine Datenbank 22, welche vorzugsweise im Speicher 6 der Waage 1 oder gegebenenfalls in einem an die Waage 1 angeschlossenen Computer 15 abgelegt ist, zugreift, um die entsprechenden Informationen über die verwendeten Chemikalien zu erhalten. Dieser Abruf erfolgt in einfacher Weise, beispielsweise mittels eines Tastendrucks an der Anzeige- und Bedieneinheit 4 der Waage 1.
133 Eingabe der Zielkonzentration der Lösung in der gewünschten Masseinheit. Gegebenenfalls erforderliche Umrechnungen auf andere Einheiten werden vom Programm automatisch durchgeführt.
134 Eingabe des Zielvolumens, für die herzustellende Lösung, welches sich hauptsächlich am Bedarf der Lösung für weitere Prozesse orientieren wird.
135 Aufruf der Berechnungsroutine für die einzuwiegende Menge der ersten Substanz (Feststoffsubstanz) beispielsweise durch Drücken einer Taste 21 als Bestätigung der vorgängig abgearbeiteten Schritte des Arbeitsablaufs. Dabei erfolgt die Berechnung durch das Programm mittels der Informationen aus der Datenbank 22 und wird der Bedienperson am Bildschirm 20 der Anzeige- und Bedieneinheit 4 angezeigt.
136 Einwiegen der dem Zielgewicht der ersten Substanz (Feststoffsubstanz) entsprechenden Menge in ein auf der Waagschale 3 platziertes und für die Lösungsherstellu.ng geeignetes Gefäss 12, nachdem die Waage 1 auf das Gefäss 12 tariert wurde. Die Einwaage muss in den meisten Fällen, d.h. wenn nicht ein ganz genaues Zielvolumen gefordert ist, nur ungefähr dem bereits errechneten Gewicht entsprechen, da die zuzugebende Menge an Lösungsmittel zu diesem Zeitpunkt noch nicht berechnet worden ist. Diese Berechnung erfolgt anhand des Wägeergebnisses nach dem Drücken einer Bestätigungstaste 21 automatisch, wobei das Programm diese Berechnung unter Berücksichtigung der Substanzparameter ausführt. Das Programm selektiert sodann eine geeignete Pipette 2' aus einer Auswahl von sich am Arbeitsplatz befindlichen Pipetten 2, 2', 2" und kennzeichnet diese durch ein Signal, beispielsweise eine blinkende Leuchtdiode 16. Dabei wird gleichzeitig noch das Zielvolumen für das Lösungsmittel an der Pipette 2' automatisch voreingestellt.
137 Aufnahme des Lösungsmittels mit der entsprechenden Pipette 2'.
138 Abgabe des Lösungsmittels in das Gefäss 12 mit der ersten Substanz mittels der Pipette 2', wobei das Zielgefäss 12 sich nach wie vor auf der Waagschale 3 der Waage 1 befindet.
139 Unterstützen des Lösungsvorgangs zum Beispiel durch Umrühren im Gefäss 12. Nach Drücken einer Bestätigungstaste 21 wird das Gewicht der fertigen Lösung durch die Waage 1 bestimmt und es wird geprüft, ob die hergestellte Lösung in Bezug auf die eingewogenen und zugegebenen Substanzen sowie die in den Berechnungen verwendeten Daten und Parameter plausibel ist, und inwieweit die erzeugte Lösung innerhalb des Zielbereichs der erwünschten Konzentration und/oder des Volumens liegt.
140 Auf das Drücken einer für einen Druckbefehl spezifizierten Taste 21' an der Anzeige- und Bedieneinheit 4 der Waage 1 oder einer Bestätigungstaste oder eines Touch-Screen-Feldes erfolgt das Ausdrucken eines Protokolls 17 auf einem mit der Waage 1 verbundenen Drucker 14. Im Protokoll 17 sind die verwendeten Chemikalien sowie deren spezifische Stoffparameter, die hergestellte Lösung, deren Menge und Konzentration, und möglicherweise weitere Daten, beispielsweise welche Bedienperson die Lösung hergestellt hat etc. dokumentiert.

Die Schritte 132 bis 134 können auch zusammengefasst werden, wenn eine sogenannte Methode bereits in der Waage 1 abgespeichert ist, d.h. ein Arbeitsablauf, bei welchem die zu verwendenden Substanzen und deren Parameter bereits bekannt sind und auch die Zielkonzentration sowie das Zielvolumen bereits fest vorgegeben sind. Eine solche Methode wird bevorzugt dann erstellt und als solche abgespeichert, wenn immer wieder die selbe Lösung und/oder Verdünnung herzustellen ist.

Zur Erhöhung der Genauigkeit, insbesondere der unter Schritt 135 und Schritt 139 beschriebenen Massenberechnungen, kann es notwendig sein bei diesem Verfahren zur Herstellung von Lösungen und/oder Verdünnungen die Temperatur sowohl der verwendeten Substanzen als auch insbesondere der Lösung oder der Verdünnung zu berücksichtigen. Da die Dichte einer Substanz, insbesondere einer Flüssigkeit bekanntlich temperaturabhängig ist, erhöht die Kenntnis der Temperatur die Genauigkeit der Massenberechnung für die einzuwiegenden Substanzen (Schritt 135) und der gesamten Lösung für die Plausibilitätsbetrachtung (Schritt 139).

Die Temperatur der Ausgangssubstanzen und/oder der fertigen Lösung kann zum Beispiel mit einem geeigneten elektronischen Thermometer bestimmt werden und die Daten der Waage 1 übermittelt werden. Der Parameter Temperatur findet dann bei den durchzuführenden Berechnungen entsprechend Berücksichtigung.

Es kann nun auch ein Etikettendrucker 18 an der Waage 1 angeschlossen sein, welcher nach erfolgtem Druck-Befehl ein Etikett ausdruckt, das an dem Gefäss 12 mit der Lösung angebracht werden kann. Ausserdem kann noch eine Datenverbindung von der Waage 1 zu einem Labor-Informations-Management-System (LIMS) bestehen, über welche die relevanten Daten der Lösungsherstellung im LIMS abgelegt werden.

Der in der Figur 2b dargestellte Arbeitsablauf kann nun auch dahingehend variiert werden, dass ein Code-Lesegerät 19 mit der Waage 1 verbunden ist. Im Zusammenhand mit den Arbeitsschritten 131 und 132 des beschriebenen Ablaufs kann ein auf dem Chemikalienbehälter angebrachter Code eingelesen werden, wodurch das Programm in die Lage gebracht wird, unmittelbar auf die entsprechenden Substanzdaten und Substanzparameter in der Datenbank 22 zuzugreifen, ohne dass es einer Eingabe durch die Bedienperson bedarf. Gegebenenfalls kann das Programm zur Sicherheit eine Bestätigung durch die Bedienperson fordern.

Das erfindungsgemässe Verfahren dient vor allem der Arbeitserleichterung für die die Lösung herstellende Bedienperson. Insbesondere aber erhöht dieses Verfahren die Sicherheit, da durch die Berechnungsschritte im Programm in erster Linie Rechenfehler vermieden werden können und zum zweiten, das Wiegen der fertigen Lösung eine Aussage darüber erlaubt, ob die hergestellte Lösung plausibel ist. Desweiteren wird ein klares vorgegebenes Protokoll erstellt, welches die Rückverfolgbarkeit der hergestellten Lösung, beispielsweise anhand der ausgeführten Arbeitsschritte und der verwendeten Chemikalien sowie der zugrunde gelegten Parameter sicherstellt.

Es ist nunmehr lediglich erforderlich, die erwünschte Lösung, deren Zielkonzentration und Zielvolumen zu kennen und die zur Verfügung stehenden Chemikalien zu benennen und zu beschaffen. Die weiteren Berechnungsschritte und Entscheidungen werden von dem Programm übernommen. Infolgedessen führt das Verfahren auch zu einer schnelleren Abwicklung von Lösungsvorgängen, da es einer Teilautomatisierung gleich kommt. Es wird den Forderungen nach guter Laborpraxis und der Möglichkeit der Rückführbarkeit durch das Erstellen eines Protokolls 17 Rechnung getragen. Ferner kann mittels eines von der Waage 1 gesteuerten Etikettendruckers 18 ein Etikett zur Kennzeichnung des Gefässes 12 mit der hergestellten Lösung ausgedruckt werden.

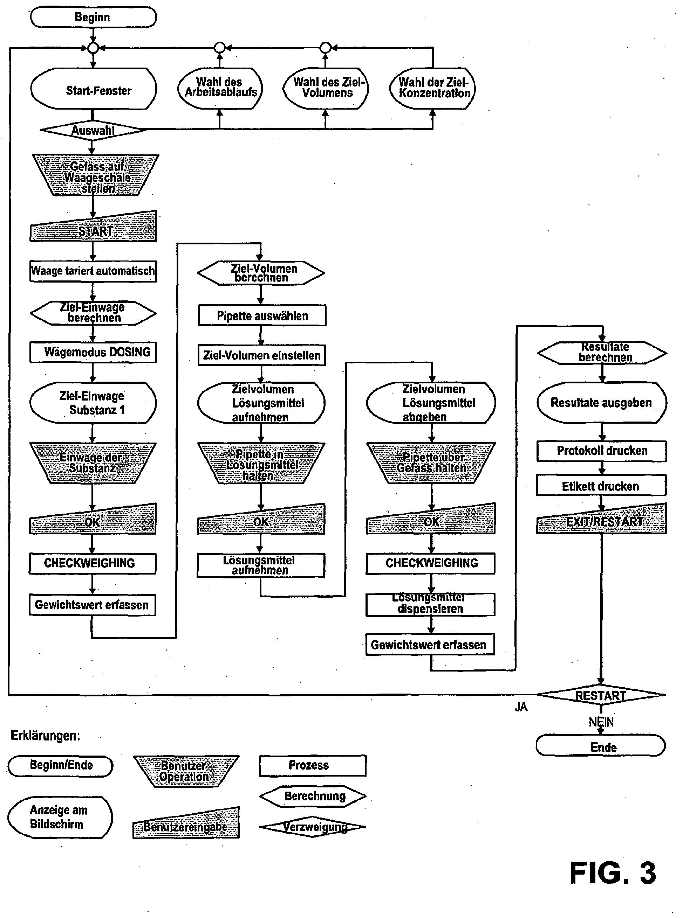

Die Figur 3 zeigt als Beispiel in einem Flussdiagramm den detaillierten Ablauf des Programms zur Herstellung einer chemischen Lösung aus einem Feststoff mit einer Flüssigkeit mittels eines erfindungsgemässen Verfahrens. Insbesondere lässt die Darstellung eine Unterscheidung verschiedener Aktionen d.h., ob diese von der Bedienperson oder vom Programm ausgeführt werden, ob ein Berechnungsschritt vorgenommen wird, oder ob es sich um eine Interaktion zwischen der Bedienperson und dem Programm vermittels der Anzeige- und Bedieneinheit 4 der Waage 1 handelt, erkennen. Nach dem Erscheinen des Startfensters auf dem Bildschirm wird dieser erneuert, wobei jeweils die Abfragen zur Wahl des Arbeitsablaufs, zur Wahl des Zielvolumens und zur Wahl der Zielkonzentration nacheinander erscheinen und mit einer Eingabe und gegebenenfalls einer Bestätigung quittiert werden müssen, bevor das Programm in seinem Ablauf fortfährt.

Das erfindungsgerriässe Programm zur Steuerung verschiedener Arbeitsabläufe und zur Durchführung notwendiger Berechnungen an einem mit einer Waage 1 und mindestens einer elektronischen Pipette 2, 2', 2" ausgestatteten Arbeitsplatz kooperiert mit den Standard-Applikationsprogrammen oder Wägemodi der Waage, beispielsweise mit dem Wägemodus "Dosieren" oder dem Wägemodus "Checkweighing" derart, dass diese, wo sie benötigt werden, in den Arbeitsablauf integriert werden können.

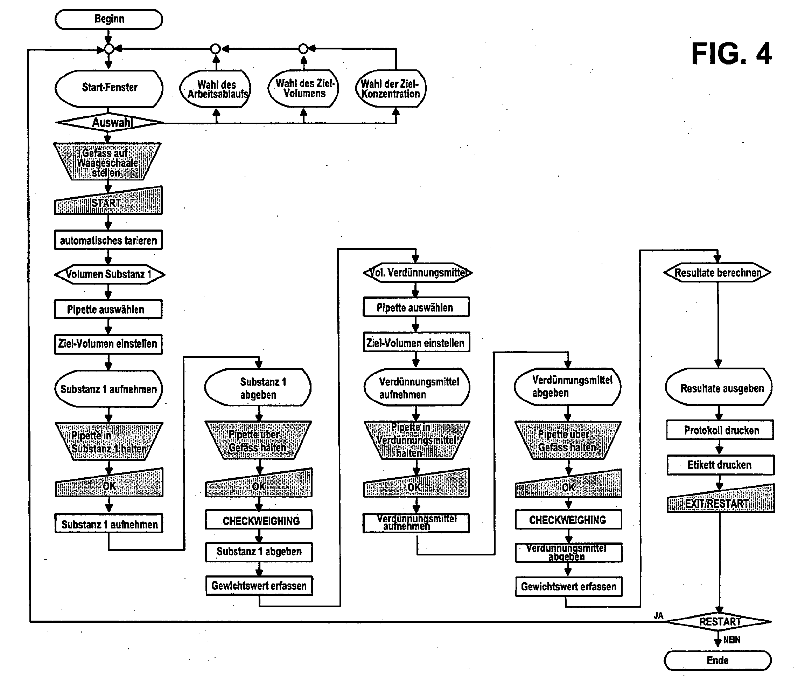

Die Figur 4 zeigt in einem analog zu Figur 3 gestalteten Flussdiagramm den detaillierten Ablauf der Herstellung einer Verdünnung einer Flüssigkeit mit einer weiteren Flüssigkeit. Die in der Figur 3 dargestellte Erklärung der verwendeten Symbole ist auch hier gültig. Bei diesem Verfahren liefert das Einwägen der zu verdünnenden Flüssigkeit (Substanz 1) einen genauen Vorgabewert, anhand dessen sich die zuzugebende Flüssigkeitsmenge ebenfalls recht genau errechnen lässt. Diese Genauigkeit kann über einen Bereich von bis zu drei Zehnerpotenzen über diejenige, die bei ausschliesslichem Abmessen mittels Pipetten erzielbar wäre, hinausreichen. In einem konventionellen Verdünnungsverfahren müsste zum Erzielen einer vergleichbaren Genauigkeit die Verdünnung in einer sogenannten Verdünnungsreihe, das heisst in mehreren Schritten, wobei die bereits verdünnte Substanz um den selben Faktor immer wieder verdünnt wird, bis die erwünschte Verdünnung beziehungsweise Konzentration erreicht ist, hergestellt werden. Somit erspart das erfindungsgemässe Verfahren zur Herstellung einer Verdünnung Zeit, erhöht die Sicherheit und vermeidet das Entstehen von Abfällen.

Es sind eine Vielzahl von Modifikationen der beschriebenen Arbeitsabläufe denkbar. So kann beispielsweise ein Kontrollschritt zur Überprüfung, ob die zu verwendende Pipette 2, 2', 2" kalibriert ist anhand eines Abrufs der entsprechenden Daten aus der Speichereinheit 8 der Pipette 2, 2', 2" vor dem Einstellen des Zielvolumens an einer selektierten Pipette 2' erfolgen. Ausserdem kann es sich ergeben, dass immer wieder wechselnde Substanzen in den genannten Prozessen eingesetzt werden oder es werden neue Kombinationen von Materialien zur Herstellung einer Lösung aus einem Feststoff mit einer Flüssigkeit und/oder einer Verdünnung einer Flüssigkeit mit einer weiteren Flüssigkeit verwendet. Dies wird zwangsläufig zu einer entsprechenden Modifikation der Arbeitsabläufe führen, was durch die oben erwähnte freie Konfigurierbarkeit der Arbeitsabläufe im Programm zur Herstellung einer Lösung aus einem Feststoff mit einer Flüssigkeit und/oder einer Verdünnung einer Flüssigkeit mit einer weiteren Flüssigkeit sehr gut realisierbar ist.

### Bezugszeichenliste

- 1: Waage
- 2: Elektronische Pipette
- 3: Waagschale
- 4: Anzeige- und Bedieneinheit
- 5: Prozessoreinheit der Waage
- 6: Speicher der Waage
- 7: Mikroprozessor der Pipette
- 8: Speichereinheit der Pipette
- 9: Datenschnittstelle Waage
- 10: Datenschnittstelle Pipette
- 11: Leuchtdiode an Pipette
- 12: Gefäss
- 13: Gehäuse
- 14: Protokolldrucker
- 15: Externe Datenverarbeitungsanlage
- 16: Leuchtdiode
- 17: Protokoll
- 18: Etikettendrucker
- 19: Code-Lesegerät
- 20: Bildschirm
- 21: Taste, Bestätigungstaste
- 21': Taste für den Druckbefehl
- 22: Datenbank
- 25: Anzeigebereich
- 30-40: Arbeitsschritte in einem Ablauf zur Herstellung einer Lösung nach dem Stand der Technik
- 130-140: Arbeitsschritte in einem Ablauf zur Herstellung einer Lösung nach einem erfindungsgemässen Verfahren

## Patentansprüche

1. Vorrichtung zur Herstellung einer Lösung aus einem Feststoff mit einer Flüssigkeit und/oder einer Verdünnung einer Flüssigkeit mit einer weiteren Flüssigkeit mit einer Waage (1), die eine Waagschale (3), eine Anzeige- und Bedieneinheit (4), einen Prozessor (5), einen Speicher (6) und eine Datenschnittstelle (9) aufweist, mit mindestens einer elektronischen Pipette (2, 2', 2"), die einen Mikroprozessor (7), eine Speichereinheit (8) und eine Datenschnittstelle (10) aufweist, wobei eine Kommunikation zwischen der Datenschnittstelle (9) der Waage (1) und der Datenschnittstelle (10) der mindestens einen elektronischen Pipette (2, 2', 2") herstellbar ist, wobei die elektronische Pipette (2, 2', 2") ein ihre Auswahl signalisierendes Kennzeichnungselement (16) aufweist, und wobei in der Waage (1) ein Programm zur Herstellung einer Lösung aus einem Feststoff mit einer Flüssigkeit und/oder einer Verdünnung einer Flüssigkeit mit einer weiteren Flüssigkeit ausführbar ist, welches dazu geeignet ist, im Prozessor (5) der Waage (1) unter Verwendung von von der Bedienperson getätigten Anweisungen und im Speicher (6) der Waage (1) vorhandenen Substanzdaten und gegebenenfalls aus ermittelten Wägeergebnissen Berechnungen auszuführen, eine zu verwendende elektronische Pipette (2, 2', 2") aus einer vorhandenen Auswahl zu selektieren und an dieser die Einstellung des aufzunehmenden und/oder abzugebenden Flüssigkeitsvolumens vorzunehmen.

2. Vorrichtung nach Anspruch 1, **dadurch gekennzeichnet, dass** ein Code-Lesegerät (19) mit der Waage (1) in einer Kommunikationsverbindung steht, welches zumindest teilweise der Dateneingabe, und insbesondere der Identifikation der zu verwendenden Chemikalien dient.

3. Vorrichtung nach Anspruch 1 oder 2, **dadurch gekennzeichnet, dass** eine Dokumentationsvorrichtung, insbesondere ein Protokolldrucker (14) und/oder ein Etikettendrucker (18) mit der Waage (1) in Verbindung stehend, vorhanden ist.

4. Vorrichtung nach Anspruch 1, 2 oder 3, **dadurch gekennzeichnet, dass** eine Datenbank (22) im Speicher (6) der Waage (1) vorhanden ist, in welcher Substanzdaten und/oder Substanzparameter und/oder Arbeitsabläufe vorhanden sind.

5. Vorrichtung nach einem der Ansprüche 1 bis 4, **dadurch gekennzeichnet, dass** die Waage (1) in einer Kommunikationsverbindung mit einem Labor-Informations-Management-System steht, in welchem Substanzdaten und/oder Substanzparameter und/oder Arbeitsabläufe abgelegt sind.

6. Vorrichtung nach einem der Ansprüche 1 bis 4, **dadurch gekennzeichnet, dass** die Waage (1) mit einer Datenverarbeitungsanlage (15), insbesondere einem Personalcomputer oder einem Palmtop verbunden ist, in welchem Substanzdaten und/oder Substanzparameter und/oder Arbeitsabläufe abgelegt sind.

7. Vorrichtung nach einem der Ansprüche 1 bis 4, **dadurch gekennzeichnet, dass** die Waage (1) an einen Rechner in einem Computer-Netzwerk angeschlossen ist, in welchem Substanzdaten und/oder Substanzparameter und/oder Arbeitsabläufe abgelegt sind.

8. Verfahren zur Herstellung einer Lösung aus einem Feststoff mit einer Flüssigkeit und/oder einer Verdünnung einer Flüssigkeit mit einer weiteren Flüssigkeit unter Verwendung einer mit einer Anzeige- und Bedieneinheit (4), einem Prozessor (5), einem Speicher (6) und einer Datenschnittstelle (9) versehenen Waage (1) und mindestens einer elektronischen Pipette (2, 2', 2"), die einen Mikroprozessor (7), eine Speichereinheit (8), ein Kennzeichnungselement (16, 16') und eine Datenschnittstelle (10) aufweist, wobei die Waage (1) und die mindestens eine elektronische Pipette (2, 2', 2") über ihre jeweilige Datenschnittstelle (9, 10) in Kommunikationsverbindung miteinander gelangen, wobei ein Programm im Prozessor (5) der Waage (1) unter Verwendung von von der Bedienperson getätigten Anweisungen und im Speicher (6) der Waage (1) vorhandenen Substanzdaten und gegebenenfalls aus ermittelten Wägeergebnissen Berechnungen ausführt, eine geeignete elektronische Pipette (2, 2', 2") aus einer vorhandenen Auswahl selektiert, das Kennzeichnungselement (16') der selektierten elektronischen Pipette (2, 2', 2") aktiviert und an der elektronischen Pipette (2, 2', 2") die Einstellung des aufzunehmenden und/oder abzugebenden Flüssigkeitsvolumens vornimmt.

9. Verfahren nach Anspruch 8, **dadurch gekennzeichnet, dass** eine Datenbank (22) vorhanden ist und die die elektronische Pipette (2, 2', 2") steuernde Waage (1) Arbeitsabläufe, Substanzdaten und/oder Substanzparameter aus der Datenbank (22) abruft.

10. Verfahren, nach Anspruch 8 oder 9, **dadurch gekennzeichnet, dass** die Waage (1) das Gewicht einer hergestellten Lösung und/oder Verdünnung erfasst und die erfolgte Herstellung einer Lösung und/oder einer Verdünnung einer Plausibilitätskontrolle unterzogen wird.

11. Verfahren nach Anspruch 10, **dadurch gekennzeichnet, dass** die Temperatur der Lösung gemessen wird und als Parameter in die Berechnungen für die Plausibilitätskontrolle eingeht.

12. Verfahren nach einem der Ansprüche 8 bis 11, **dadurch gekennzeichnet, dass** eine Dokumentationsvorrichtung mit der Waage (1) in Verbindung stehend vorhanden ist, welche Dokumentationsvorrichtung ein Protokoll (17) über eine durchgeführte und/oder gegebenenfalls abgebrochene Herstellung einer Lösung aus einem Feststoff mit einer Flüssigkeit und/oder einer Verdünnung einer Flüssigkeit mit einer weiteren Flüssigkeit erstellt.

13. Verfahren nach einem der Ansprüche 8 bis 12, umfassend die folgenden durch die Bedienperson zu tätigenden Verfahrensschritte:
▪ Auswahl und Bereitstellung der für die zu erzeugende Lösung und/oder die zu erzeugende Verdünnung notwendigen Chemikalien,
▪ Aufruf einer Arbeitsanweisung an der Anzeige- und Bedieneinheit (4) der Waage(1),
▪ Abruf der benötigten Substanz-Parameter an der Anzeige- und Bedieneinheit (4) der Waage (1),
▪ Eingabe der Zielkonzentration der Lösung und/oder Verdünnung an der Anzeige- und Bedieneinheit (4) der Waage (1),
▪ Eingabe des Zielvolumens der Lösung und/oder Verdünnung an der Anzeige-und Bedieneinheit (4) der Waage(1),
▪ Aufruf der Berechnungsroutine für eine einzuwiegende erste Substanz an der Anzeige- und Bedieneinheit (4) der Waage (1),
▪ Einwiegen einer ersten Substanz in ein auf der Waagschale (3) befindliches Gefäss (12),
▪ Aufnahme einer zweiten Substanz mittels einer vom Programm ausgewählten und signalisierten voreingestellten elektronischen Pipette (2, 2', 2"),
▪ Abgabe des an der Flüssigkeitsdossiervorrichtung eingestellten Volumens in das auf der Waagschale (3) befindliche Gefäss (12) mit der ersten Substanz,
▪ Eingabe des Protokollierungsbefehls an der Anzeige- und Bedieneinheit (4) der Waage(1).

14. Verfahren nach einem der Ansprüche 8 bis 13, **dadurch gekennzeichnet, dass** ein Arbeitsablauf frei konfigurierbar ist.

15. Verfahren nach einem der Ansprüche 8 bis 14, **dadurch gekennzeichnet, dass** die Waage (1) mit einer Datenverarbeitungsanlage (15) und/oder einem Rechner in einem Computer-Netzwerk und/oder einem Labor-Informations-Management-System in Verbindung steht, aus deren jeweiligem Speicher Substanzdaten und/oder Substanzparameter einer aktuell herzustellenden Lösung aus einem Feststoff mit einer Flüssigkeit und/oder einer Verdünnung einer Flüssigkeit mit einer weiteren Flüssigkeit abruft und für die Verwendung der für eine aktuelle Arbeitsanweisung notwendigen Berechnungen in den Speicher (6) der Waage (1) einliest.

16. Verfahren nach Anspruch 15, **dadurch gekennzeichnet, dass** die Daten sowie das Protokoll (17) über eine erfolgte Herstellung einer Lösung oder einer Verdünnung in einem Labor-Informations-Management-System abgelegt werden und von dort gegebenenfalls für eine weitere Verwendung zur Verfügung gestellt werden.

17. Programm, welches in einer Vorrichtung gemäss einem der Ansprüche 1 bis 7 ausführbar ist, **dadurch gekennzeichnet, dass** das Programm einen von einer Bedienperson bestimmten Arbeitsablauf zur Herstellung einer Lösung aus einem Feststoff mit einer Flüssigkeit und/oder einer Verdünnung einer Flüssigkeit mit einer weiteren Flüssigkeit abarbeitet unter Verwendung von von der Bedienperson getätigter Anweisungen und im Speicher (6) der Waage (1) vorhandenen Substanzdaten und gegebenenfalls aus ermittelten Wägeergebnissen Berechnungen ausführt, eine zu verwendende elektronischen Pipette (2, 2', 2") aus einer vorhandenen Auswahl selektiert und das Kennzeichnungselement (16') der selektierten elektronischen Pipette (2, 2', 2") aktiviert und an der elektronischen Pipette (2, 2', 2") die Einstellung des aufzunehmenden und/oder abzugebenden Flüssigkeitsvolumens vornimmt.

18. Programm nach Anspruch 17, **dadurch gekennzeichnet, dass** es fähig ist, die folgenden Aktionen in einem Verfahren gemäss einem der Ansprüche 8 bis 16 auszuführen:
▪ Umrechnung einer Zielkonzentration für eine Lösung oder eine Verdünnung von einer eingegebenen Masseinheit in eine gewünschte Masseinheit aus Substanzdaten und Substanzparametern,
▪ Berechnung der für die Herstellung einer Lösung oder eine Verdünnung erforderlichen Flüssigkeitszugabe bei durch eine Waage ermitteltem Gewicht einer ersten Substanz,
▪ Auswahl einer geeigneten elektronischen Pipette (2, 2', 2") und Kennzeichnung derselben,
▪ Einstellung der entsprechenden elektronischen Pipette (2, 2', 2") für die Aufnahme und/oder Abgabe des zu dosierenden Volumens,
▪ Anzeige des Gesamtgewichts und/oder weiterer Parameter an der Anzeige- und Bedieneinheit der Waage,
▪ Vergleich der Masse einer zudosierten zweiten Substanz mit den aus dem eingestellten Volumen und der gespeicherten Dichte, gegebenenfalls unter Berücksichtigung der Temperatur, errechneten Werten für eine gravimetrische Kontrolle der hergestellten Lösung,
▪ Aussage zur Plausibilität die erwünschte Lösung innerhalb eines vordefinierten Toleranzfensters in Bezug auf ein Zielvolumen und/oder eine Zielkonzentration hergestellt zu haben,
▪ Protokollierung der eingestellten Parameter und der Messdaten.

## Claims

1. Apparatus for preparing a solution of a solid with a liquid and/or a dilution of a liquid with another liquid, comprising a balance (1) that has a weighing pan (3), a display- and operating unit (4), a processor (5), a storage memory (6), and a data interface (9), and further comprising at least one electronic pipette (2, 2', 2"), which is equipped with a microprocessor (7), a memory unit (8), and a data interface (10), wherein a communication can be established between the data interface (9) of the balance (1) and the data interface (10) of the at least one electronic pipette (2, 2', 2"), wherein the electronic pipette (2, 2', 2") has an identifier element (16) that signals when the electronic pipette (2, 2', 2") has been selected, and wherein a program is executable in the balance (1) for preparing a solution of a solid with a liquid and/or a dilution of a liquid in another liquid, said program being capable of performing calculations in the processor (5) of the balance (1) based on instructions given by the attendant, also based on substance data stored in the memory (6) of the balance (1) and in certain cases based on weighing results, said program being further capable of selecting an electronic pipette (2, 2', 2") from an available selection and setting the electronic pipette (2, 2', 2") for the liquid volume that is to be taken in and/or dispensed.

2. Apparatus according to claim 1, **characterized in that** a code reader (19) is connected for communication with the balance (1), said code reader serving at least in part for entering data, and in particular for identifying the chemicals that are to be used.

3. Apparatus according to claim 1 or claim 2, further comprising a recording device, in particular an activity log printer (14) and/or a label printer (18) interfaced with the balance (1).

4. Apparatus according to claim 1, 2 or 3, **characterized in that** the storage memory (6) of the balance (1) comprises a database (22) wherein the database (22) holds substance data and/or substance parameters and/or work procedures.

5. Apparatus according to one of the claims 1 to 4, **characterized in that** the balance (1) is interfaced for communication with a laboratory information management system, wherein substance data and/or substance parameters and/or work procedures are stored in the laboratory information management system.

6. Apparatus according to one of the claims 1 to 4, **characterized in that** the balance (1) is interfaced with a data-processing system (15), in particular with a personal computer or a palmtop computer, wherein substance data and/or substance parameters and/or work procedures are stored in the personal computer or palmtop computer.

7. Apparatus according to one of the claim 1 to 4, **characterized in that** the balance (1) is interfaced with a computer in a computer network, wherein substance data and/or substance parameters and/or work procedures are stored in the computer.

8. Method for preparing a solution of a solid with a liquid and/or a dilution of a liquid with another liquid, wherein the method includes the use of a balance (1) that has a display- and operating unit (4), a processor (5), a storage memory (6), and a data interface (9), and wherein the method further includes the use of at least one electronic pipette (2, 2', 2"), which is equipped with a microprocessor (7), a memory unit (8), a data interface (10), and an identifier element (16, 16'), wherein the balance (1) and the at least one electronic pipette (2, 2', 2") can be connected to communicate with each other through their respective data interfaces (9, 10), wherein a program in the processor (5) of the balance (1) performs calculations based on instructions given by the attendant, also based on substance data stored in the memory (6) of the balance (1) and in certain cases based on weighing results, and wherein said program selects a suitable electronic pipette (2, 2', 2") from an available selection, activates the identifier element (16') of the selected electronic pipette (2, 2', 2") and sets the electronic pipette (2, 2', 2") for the liquid volume that is to be taken in and/or dispensed.

9. Method according to claim 8 , **characterized in that** a database (22) is available and wherein the balance (1) which controls the electronic pipette (2, 2', 2") calls up work instructions, substance data and/or substance parameters from the database (22).

10. Method according to one of the claims 8 or 9, **characterized in that** the balance (1) measures the weight of a completed solution and/or dilution, and wherein the completed process of making a solution and/or dilution is subjected to a plausibility check.

11. Method according to claim 10, **characterized in that** the temperature of the solution is measured and used as an input parameter in the calculations for the plausibility check.

12. Method according to one of the claims 10 or 11, **characterized in that** a recording device is available and interfaced to the balance (1), and wherein said recording device generates an activity log (17) of a completed and/or prematurely terminated preparation of a solution of a solid with a liquid and/or a dilution of a liquid with a further liquid.

13. Method according to one of the claims 8 to 12, comprising the following method steps to be performed by the attending person:
▪ selecting and obtaining the chemicals required for the solution and/or dilution to be prepared,
▪ calling up a work instruction on the display- and operating unit (4) of the balance (1),
▪ calling up the required substance parameters on the display- and operating unit (4) of the balance (1),
▪ entering the targeted concentration of the solution and/or dilution on the display- and operating unit (4) of the balance (1),
▪ entering the targeted volume of the solution and/or dilution on the display- and operating unit (4) of the balance (1),
▪ calling up the calculation routine on the display- and operating unit (4) of the balance (1) for a first substance to be weighed in,
▪ weighing a first substance into a container 12 on the weighing pan (3),
▪ taking up a second substance by means of an electronic pipette (2, 2', 2") that has been selected and preset by the program and identified through a signal,
▪ delivering the volume that has been set on the electronic pipette (2, 2', 2") into the container (12) that is sitting on the balance pan (3) and contains the first substance,
▪ entering the command for generating the activity log on the display- and operating unit (4) of the balance (1).

14. Method according to one of the claims 8 to 13, **characterized in that** a work procedure is freely configurable.

15. Method according to one of the claims 8 to 14, **characterized in that** the balance (1) is interfaced with a data-processing system (15) and/or a computer in a computer network and/or a laboratory information management system whose respective memory is accessed by the balance (1) to call up substance data and/or substance parameters for a solution that is currently to be prepared of a solid with a liquid and/or a dilution that is currently to be prepared of a liquid with another liquid, and to enter said substance data and/or substance parameters in the storage memory (6) of the balance (1) for use in the calculations required under a current work procedure.

16. Method according to claim 15, **characterized in that** the data as well as the activity log (17) of a completed solution- or dilution procedure are stored in a laboratory information management system, from which the data and/or the activity log (17) can be made available for further use.

17. Program which can be executed in an apparatus according to claims 1 to 7, **characterized in that** the program performs a work procedure selected by an attending person for preparing a solution of a solid with a liquid and/or a dilution of a liquid with another liquid, wherein the program performs calculations based on instructions entered by the attendant, based on substance data stored in the memory (6) of the balance (1), and/or based on obtained weighing results, and wherein the program selects an electronic pipette (2, 2', 2") from an available selection, activates the identifier element (16') of the selected electronic pipette (2, 2', 2") and sets the electronic pipette (2, 2', 2") for the liquid volume that is to be taken in and/or dispensed.

18. Program according to claim 17, **characterized in that** the program has the capability to perform the following operations under a method according to one of the claims 8 to 16:
▪ converting a target concentration for a solution or a dilution from an entered unit of measure to a desired unit of measure compatible with the substance data and substance parameters,
▪ calculating the amount of liquid required for preparing a solution or dilution based on the weight of a first substance that has been measured with a balance,
▪ selecting a suitable electronic pipette (2, 2', 2") and identifying the selected electronic pipette (2, 2', 2")
▪ setting the selected electronic pipette (2, 2', 2") for a volume dose to be taken in and/or dispensed,
▪ displaying the total weight and/or additional parameters in the display- and operating unit of the balance,
▪ after a second substance has been added, comparing its mass to the calculated values based on the volume that was set in the electronic pipette (2, 2', 2") and based on the stored density value, wherein the calculation may take the temperature into account, for a gravimetric verification check of the completed solution,
▪ providing an indication of the plausibility that the desired solution has been produced within a predefined tolerance window relative to a target volume and/or a target concentration,
▪ generating a log record of the parameter settings and the measured data.

## Revendications

1. Dispositif pour la fabrication d'une solution à partir d'un solide avec un liquide et/ou d'une dilution d'un liquide avec un autre liquide, avec une balance (1) comprenant un plateau (3), une unité d'affichage et de commande (4), un processeur (5), une mémoire (6) et une interface de données (9), avec au moins une pipette électronique (2, 2', 2") comprenant un microprocesseur (7), une unité de mémoire (8) et une interface de données (10), dans lequel une communication peut être établie entre l'interface de données (9) de la balance (1) et l'interface de données (10) de l'au moins une pipette électronique (2, 2', 2"), dans lequel la pipette électronique (2, 2', 2") présente un élément d'identification (16) signalant son choix, et dans lequel un programme pour la fabrication d'une solution à partir d'un solide avec un liquide et/ou d'une dilution d'un liquide avec un autre liquide peut être exécuté dans la balance (1), lequel est adapté pour effectuer des calculs dans le processeur (5) de la balance (1), à l'aide de consignes mises en oeuvre par l'opérateur et de données de substance présentes dans la mémoire (6) de la balance (1), et éventuellement à partir de résultats de pesage déterminés, pour sélectionner une pipette électronique (2, 2', 2") à utiliser parmi un choix existant, et pour procéder au réglage du volume de liquide à prélever et/ou à alimenter.

2. Dispositif selon la revendication 1, **caractérisé en ce qu'**un appareil de lecture de code (19) se trouve en liaison de communication avec la balance (1), lequel sert au moins partiellement à la saisie de données, et en particulier à l'identification des substances chimiques à utiliser.

3. Dispositif selon la revendication 1 ou 2, **caractérisé en ce qu'**un dispositif de documentation, en particulier une imprimante de protocoles (14) et/ou une imprimante d'étiquettes (18), est relié à la balance (1).

4. Dispositif selon la revendication 1, 2 ou 3, **caractérisé en ce que** la mémoire (6) de la balance (1) contient une banque de données (22) comprenant des données de substance et/ou des paramètres de substance et/ou des procédés de travail.

5. Dispositif selon l'une des revendications 1 à 4, **caractérisé en ce que** la balance (1) se trouve en liaison de communication avec un système de gestion d'informations de laboratoire, dans lequel sont déposés des données de substance et/ou des paramètres de substance et/ou des procédés de travail.

6. Dispositif selon l'une des revendications 1 à 4, **caractérisé en ce que** la balance (1) est reliée à un système de traitement de données (15), en particulier un ordinateur personnel ou un ordinateur palmaire, dans lequel sont déposées des données de substance et/ou des paramètres de substance et/ou des procédés de travail.

7. Dispositif selon l'une des revendications 1 à 4, **caractérisé en ce que** la balance (1) est raccordée à une calculatrice dans un réseau informatique, dans lequel sont déposées des données de substance et/ou des paramètres de substance et/ou des procédés de travail.

8. Procédé pour la fabrication d'une solution à partir d'un solide avec un liquide et/ou d'une dilution d'un liquide avec un autre liquide, à l'aide d'une balance (1) dotée d'une unité d'affichage et de commande (4), d'un processeur (5), d'une mémoire (6) et d'une interface de données (9), et à l'aide d'au moins une pipette électronique (2, 2', 2") comprenant un microprocesseur (7), une unité de mémoire (8), un élément d'identification (16, 16') et une interface de données (10), dans lequel la balance (1) et l'au moins une pipette électronique (2, 2', 2") peuvent être mises en liaison de communication par le biais de leur interface de données respective (9, 10), dans lequel un programme effectue des calculs dans le processeur (5) de la balance (1), à l'aide de consignes fournies par l'opérateur et de données de substance présentes dans la mémoire (6) de la balance (1), et éventuellement à partir de résultats de pesage déterminés, sélectionne une pipette électronique (2, 2', 2") à utiliser parmi un choix existant, active l'élément d'identification (16') de la pipette électronique (2, 2', 2") sélectionnée, et procède au réglage du volume de liquide à prélever et/ou à alimenter, sur la pipette électronique (2, 2', 2").

9. Procédé selon la revendication 8, **caractérisé en ce qu'**il est prévu une banque de données (22), et la balance (1) commandant la pipette électronique (2, 2', 2") récupère des procédés de travail, des données de substance et/ou des paramètres de substance à partir de la banque de données (22).

10. Procédé selon la revendication 8 ou 9, **caractérisé en ce que** la balance (1) détecte le poids d'une solution et/ou d'une dilution fabriquée, et la fabrication finie d'une solution et/ou d'une dilution est soumise à un contrôle de plausibilité.

11. Procédé selon la revendication 10, **caractérisé en ce que** la température de la solution est mesurée et prise en compte dans le calcul en tant que paramètre pour le contrôle de plausibilité.

12. Procédé selon l'une des revendications 8 à 11, **caractérisé en ce qu'**un dispositif de documentation est relié à la balance (1), ledit dispositif de documentation établissant un protocole (17) concernant une fabrication finie et/ou le cas échéant interrompue d'une solution, à partir d'un solide avec un liquide et/ou d'une dilution d'un liquide avec un autre liquide.

13. Procédé selon l'une des revendications 8 à 12, comprenant les étapes de procédé suivantes, à exécuter par l'opérateur :
• choix et mise à disposition des substances chimiques nécessaires pour la solution à fabriquer et/ou pour la dilution à fabriquer,
• récupération d'une consigne de travail dans l'unité d'affichage et de commande (4) de la balance (1),
• récupération des paramètres de substance nécessaires dans l'unité d'affichage et de commande (4) de la balance (1),
• saisie de la concentration cible de la solution et/ou de la dilution dans l'unité d'affichage et de commande (4) de la balance (1),
• saisie du volume cible de la solution et/ou de la dilution dans l'unité d'affichage et de commande (4) de la balance (1),
• récupération de la routine de calcul pour une première substance à peser, dans l'unité d'affichage et de commande (4) de la balance (1),
• pesage d'une première substance dans un récipient (12) disposé sur le plateau (3),
• prélèvement d'une deuxième substance au moyen d'une pipette électronique (2, 2', 2") préréglée, sélectionnée et signalisée par le programme,
• dépôt du volume réglé sur le dispositif de dosage de liquide, dans le récipient (12) contenant la première substance, situé sur le plateau (3),
• saisie de l'ordre de consignation dans l'unité d'affichage et de commande (4) de la balance (1).

14. Procédé selon l'une des revendications 8 à 13, **caractérisé en ce qu'**un procédé de travail peut être configuré librement.

15. Procédé selon l'une des revendications 8 à 14, **caractérisé en ce que** la balance (1) est reliée à un système de traitement de données (15) et/ou à une calculatrice dans un réseau informatique et/ou à un système de gestion d'informations de laboratoire, récupère, à partir de la mémoire respective de ceux-ci, des données de substance et/ou des paramètres de substance d'une solution à fabriquer actuellement à partir d'un solide avec un liquide et/ou d'une dilution d'un liquide avec un autre liquide, et transfère des calculs nécessaires pour l'utilisation de la consigne de travail actuelle vers la mémoire (6) de la balance (1).

16. Procédé selon la revendication 15, **caractérisé en ce que** les données ainsi que le protocole (17) sont déposés dans un système de gestion d'informations de laboratoire, par le biais d'une fabrication finie d'une solution ou d'une dilution, et éventuellement mis à disposition pour une utilisation ultérieure, à partir de là.

17. Programme exécutable dans un dispositif selon l'une des revendications 1 à 7, **caractérisé en ce que** le programme exécute un procédé de travail déterminé par un opérateur, pour la fabrication d'une solution à partir d'un solide avec un liquide et/ou d'une dilution d'un liquide avec un autre liquide, effectue des calculs à l'aide de consignes mises en oeuvre par l'opérateur et de données de substance présentes dans la mémoire (6) de la balance (1), et éventuellement à partir de résultats de pesage déterminés, sélectionne une pipette électronique (2, 2', 2") à utiliser parmi un choix existant, active l'élément d'identification (16') de la pipette électronique (2, 2', 2"), et procède au réglage du volume de liquide à prélever et/ou à alimenter, sur la pipette électronique (2, 2', 2").

18. Programme selon la revendication 17, **caractérisé en ce qu'**il est capable d'exécuter les actions suivantes au cours d'un procédé selon l'une des revendications 8 à 16 :
• conversion d'une concentration cible pour une solution ou une dilution, d'une unité de mesure saisie en une unité de mesure souhaitée, à partir de données de substance et de paramètres de substance,
• calcul de l'ajout de liquide nécessaire pour la fabrication d'une solution ou d'une dilution, pour un poids d'une première substance déterminé par une balance,
• choix d'une pipette électronique (2, 2', 2") appropriée et identification de celle-ci,
• réglage de la pipette électronique (2, 2', 2") pour le prélèvement et/ou le dépôt du volume à doser,
• affichage du poids global et/ou d'autres paramètres sur l'unité d'affichage et de commande de la balance,
• comparaison de la masse d'une deuxième substance ajoutée avec les valeurs calculées à partir du volume réglé et des données enregistrées, en tenant éventuellement compte de la température, pour un contrôle gravimétrique de la solution fabriquée,
• détermination de la plausibilité de la fabrication d'une solution souhaitée, dans le cadre d'une fenêtre de tolérance prédéfinie, par rapport à un volume cible et/ou à une concentration cible,
• consignation des paramètres réglés et des données de mesure.
